# EUROPÄISCHE PATENTANMELDUNG

(11) **EP 1 107 256 A2**
(43) Veröffentlichungstag der Anmeldung: **13.06.2001**
(21) Anmeldenummer: 00126223.7
(22) Anmeldetag: 30.11.2000
(51) Int. Cl.: G11B 27/36, H04N 5/765, H04N 5/782, H04N 5/445, G04G 15/00, G11B 27/11, G11B 27/34, G11B 15/02, G11B 19/02, G11C 16/04

(54) **Programmierbarer Zeitgeber**

(30) Priorität: 02.12.1999 JP 34380499
(71) Anmelder: Pioneer Corporation, Tokyo 153-0063 (JP)
(72) Erfinder: Hoshi, Masayuki, Tokorozawa Koujou, Pioneer Corp., Tokorozawa-shi, Saitama-ken 359-8522 (JP)
(74) Vertreter: Bohnenberger, Johannes, Dr.

(57) **Abstract**

A timer reservation device which can display the recordable term of a reserved program to be executed repetitively, as well as of a one-shot reservation. In the timer reservation device, a CPU calculates up to what date the reserved program to be executed repetitively is recordable on a record medium, based on the remaining recordable capacity of the record medium and the recording time of one execution of the reserved program, and displays the date on a display unit. Moreover, even in the presence of another reserved program to reserve a recording only at a designated date, the date up to which the recording by the repetitive reserved program is executable can be calculated likewise, based on the recording time of the reserved program to be executed only at a designated date as well. Then, the date can be displayed to improve inconveniences resulting from shortage of record medium capacity available.

## Beschreibung

### BACKGROUND OF THE INVENTION

The present invention relates to a timer reservation device capable of displaying up to what date a reserved program to be executed repeatedly is recordable, the device being suitably applicable to audiovisual recording and reproducing apparatus.

In the field of audiovisual recording and reproducing apparatus, there is known so-called timer programming in which reserved broadcast programs are recorded on a record medium, such as an optical disc, a magnetic disc, a magnetic tape, and a semiconductor memory, at reserved dates and times.

A technology to display whether or not reserved programs are recordable at reserved dates and times has been disclosed in Japanese Patent Application Laid-Open No. 5-12753. According to this publication, the determinations as to whether or not individual reserved programs can be reserved on a tape are made upon reservation confirming operations, based on the remaining time of the tape. The numbers of the programs determined to be recordable are lit up, and the numbers of those determined to be unrecordable are blinked so that the user is informed and prompted, for example, to replace the tape.

The conventional example described above was intended for recordability determinations of reserved programs to be executed at designated dates and times. That is, the conventional example was not designed for the cases of repetitive executions, e.g., a reserved program daily video-recording a program broadcast from 8:00 to 8:15. In this case, it was impossible for the user to know up to what date the recording could be made by that reserved program. This has induced recording mistakes such as recording omissions of important records due to shortage of record medium capacity available.

### SUMMARY OF THE INVENTION

The present invention has been achieved in view of the foregoing. It is thus an object of the present invention to provide a timer reservation device which can calculate up to what date the recording of a reserved program can be made on a record medium, based on the recordable capacity of the record medium and the recording time of one execution of the reserved program, and display the date to inform the user, thereby improving inconveniences resulting from shortage of record medium capacity available.

Another object of the present invention is to provide a timer reservation device which can calculate, even if the repetitive reserved program described above is mixed with a reserved program to reserve a recording at a designated date alone, up to what date the recording of the repetitive reserved program can be made on a record medium based on the recordable capacity of the record medium, the recording time of one execution of the repetitive reserved program, and the recording time of the reserved program to be executed at a designated date alone, and display the date to improve the inconveniences resulting from shortage of record medium capacity available.

To achieve the foregoing objects, a device according to claim 1 is a timer reservation device for staring a recording onto a record medium automatically at a reserved date and time, comprising reservation setting means capable of setting a first reserved program to reserve repetitive executions of a reservation setting for a plurality of days, the reservation setting extending from a recording start time to a recording end time, remaining capacity detecting means for detecting the recordable remaining capacity of the record medium, and calculating means for calculating up to what date the recording of the first reserved program is executable on the record medium, based on the recordable remaining capacity and the recording time of one execution of the first reserved program. Here, a due date calculated by the calculating means is displayed on display means.

According to the configuration described above, it can be calculated that up to what date the recording of a reserved program is executable on a record medium, from the recordable capacity of the record medium and the recording time of one execution of the reserved program, so that the user is informed of the final recordable date of the program for repetitive reservations. As a result, it becomes possible to resolve the inconveniences resulting from shortage of record medium capacity available.

Moreover, a device according to claim 2 is the timer reservation device according to claim 1, wherein the display means is a TV set externally connected to the time reservation device, and the timer reservation device further comprises an on-screen data generating unit for generating a video signal to display specifics of the first reserved program and the due date calculated by the calculation means on a screen of the TV set.

This makes it possible to display, for example, a message for prompting record medium replacement on the TV set externally connected to the timer reservation device, thereby avoiding recording mistakes such as recording omissions of important records due to shortage of record medium capacity available.

Furthermore, a device according to claim 3 is the timer reservation device according to claim 1, wherein the reservation setting means selects at least one from among daily, day of week, Monday-Saturday, and Monday-Friday to reserve the repetitive executions of the reservation setting for a plurality of days. This facilitates the setting of programs for repetitive reservations.

A device according to claim 4 is the timer reservation device according to claim 1, wherein the timer reservation device compresses a record signal at a predetermined compression rate and recording the resultant on the record medium, and the calculating means calculates a recording capacity necessary for one execution of the reservation setting of the first reserved program based on the recording time of one execution of the first reserved program and the compression rate, subtract the necessary recording capacity from the recordable capacity repetitively, and set the due date at the date of the last reservation setting to be executed with remaining capacity.

Accordingly, even at different recording rates, it is possible to calculate the recording capacity necessary for one execution of the reservation setting of the first reserved program accurately and subtract the necessary recording capacity from the recordable capacity repetitively so that up to what date the recording of the first program is executable on the record media is calculated accurately. The final recordable date of the program for the repetitive reservations can be notified to the user to finally resolve inconveniences resulting from shortage of record medium capacity available.

A device according to claim 5 is the timer reservation device according to claim 2, wherein the reservation setting means is also capable of setting a second reserved program to reserve an execution of a reservation setting at a designated date alone, the reservation setting extending from a recording start time to a recording end time, and the timer reservation device, if the second reserved program is to be executed prior to the first-to-be-executed reservation setting of the first reserved program and requires a recording capacity smaller than or equal to the recordable capacity of the record medium, displays on the display means that the recording to be executed for the second reserved program is recordable on the record medium.

In addition, a device according to claim 6 is the timer reservation device according to claim 5, wherein the timer reservation device, if the second reserved program is to be executed prior to the first-to-be-executed reservation setting of the first reserved program and requires a recording capacity greater than the recordable capacity of the record medium, displays on the display means that the recording for the second reserved program is unrecordable on the record medium.

Moreover, a device according to claim 7 is the timer reservation device according to claim 5, wherein the timer reservation device, if the second reserved program is to be executed prior to the first-to-be-executed reservation setting of the first reserved program and requires a recording capacity greater than the recordable capacity of the record medium, displays on the display means the recording time the record medium falls short of in making the recording for the second reserved program.

Furthermore, a device according to claim 8 is the timer reservation device according to claim 1, wherein the reservation setting means is also capable of setting a second reserved program to reserve an execution of a reservation setting at a designated date alone, the reservation setting extending from a recording start time to a recording end time, and the timer reservation device, if the first reserved program contains a reservation setting to be executed prior to the second reserved program and the record medium falls short of the recordable capacity with respect to the recording time of the first reserved program, displays on the display means that the second reserved program is unrecordable, even in the cases where the second reserved program requires a recording capacity smaller than or equal to the recordable capacity of the record medium.

Accordingly, even when a repetitive reserved program is mixed with a reserved program to reserve a recording at a designated date alone, it can be notified to the user in advance by displaying that date, or the unrecordability and the time shortage what date the recording of the repetitive reserved program is executable on a record medium up to. This allows improvements against inconveniences resulting from shortage of record medium capacity available, such as recording mistakes including recording omissions of important records.

A timer reservation device according to claim 9 is a timer reservation device for staring a recording onto a record medium automatically at a reserved date and time, comprising: reservation setting means capable of setting a first reserved program to reserve repetitive executions of a reservation setting for a plurality of days and a second reserved program to reserve an execution of a reservation setting at a designated date alone, the reservation settings each extending from a recording start time to a recording end time; remaining capacity detecting means for detecting the recordable remaining capacity of the record medium; and calculating means for calculating up to what date the recording of the first reserved program is executable on the record medium, based on the recordable remaining capacity, the recording time of one execution of the first reserved program, and, if the second reserved program is to be executed prior to the first reserved program, the recording time of the second reserved program. Here, a due date calculated by the calculating means is displayed on display means.

Besides, a timer reservation device according to claim 10 is the timer reservation device according to claim 9, wherein: the display means is a TV set externally connected to the time reservation device; and the timer reservation device further comprises an on-screen data generating unit for generating a video signal to display specifics of the first reserved program and the due date calculated by the calculation means on a screen of the TV set.

Accordingly, even when a repetitive reserved program is mixed with a reserved program to reserve a recording at a designated date alone, it can be calculated from the recordable capacity of the record medium, the recording time of one execution of the repetitive reserved program, and the recording time of the reserved program to be executed at a designated date alone what date the recording of the repetitive reserved program is executable on a record medium up to. Then, the date can be displayed to improve the inconveniences resulting from shortage of record medium capacity available. For example, a message to prompt record medium replacement can be displayed on the TV set externally connected with the timer reservation device, so that recording mistakes resulting from shortage of record medium capacity available, such as recording omissions of important records, are avoided.

The nature, principle, and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a block diagram showing an embodiment of the present invention;
Fig. 2 is a flowchart for explaining an operation of reservation setting means of the present invention;
Fig. 3 is a flowchart for explaining reservation recordability determining and displaying processes of the present invention;
Fig. 4 is a flowchart for explaining the reservation recordability determining and displaying processes of the present invention as well as Fig. 3;
Figs. 5A and 5B are tables in which an embodiment of the present invention is substantiated;
Figs. 6A and 6B are diagrams showing a configuration example (1) of a timer reservation setting screen, for explaining the operation of the embodiment of the present invention, respectively;
Figs. 7A and 7B are diagrams showing a configuration example (2) of the timer reservation setting screen, for explaining the operation of the embodiment of the present invention, respectively;
Figs. 8A and 8B are diagrams showing a configuration example (3) of the timer reservation setting screen, for explaining the operation of the embodiment of the present invention, respectively;
Figs. 9A and 9B are diagrams showing a configuration example (4) of the timer reservation setting screen, for explaining the operation of the embodiment of the present invention, respectively;
Fig. 10 is a flowchart for explaining another operation of calculating means and display means of the present invention; and
Fig. 11 is a flowchart for explaining another operation of calculating means and display means of the present invention as well as Fig. 10.

### DETAILED DESCRIPTION OF THE PREFERRED EMBODIMENTS

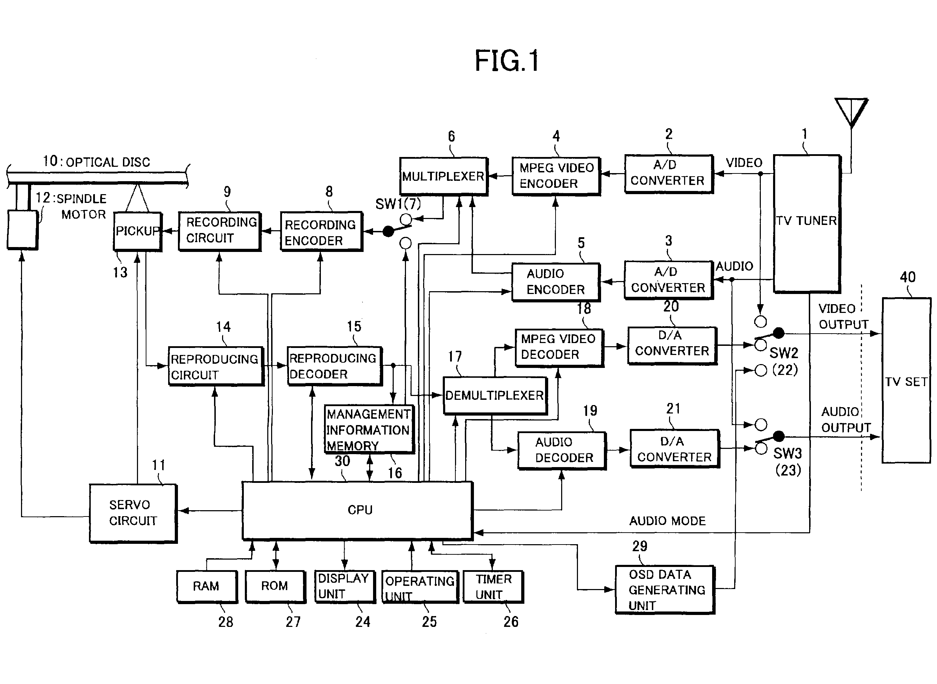

Fig. 1 is a block diagram showing an embodiment of the present invention. The timer reservation device illustrated here is an optical recording and reproducing apparatus. In the diagram, the reference numeral 1 designates a TV tuner. Images and sounds received by the TV tuner 1 are supplied to an MPEG (Moving Picture Experts Group) video encoder 4 and an audio encoder 5 through A/D (Analog-Digital) converters 2 and 3, respectively. The individual signals compressed here are supplied to a recording encoder 8 via a multiplexer 6 and a switch 7. The signals are then modulated by a recording circuit 9, and recorded onto an optical disc 10, such as a DVD, through a pickup 13.

In this connection, the optical disc 10, such as a digital video disc (DVD), is servo-controlled at constant linear velocity (CLV) by a servo circuit 11 under the control of a CPU 30. The optical disc 10 is rotated by a spindle motor 12.

Now, signals read through the pickup 13 are demodulated by a reproducing circuit 14, and supplied to a demultiplexer 17 through a reproducing decoder 15. The signals output from the demultiplexer 17, i.e. video signals and audio signals, are supplied to an MPEG video decoder 18 and an audio decoder 19 for decoding, respectively. The decoded video signals are supplied through a D/A (Digital-Analog) converter 20 and a switch 22 to an externally connected TV set 40 as a video output. Besides, the decoded audio signals are supplied through a D/A converter 21 and a switch 23 to the TV set 40 as an audio output.

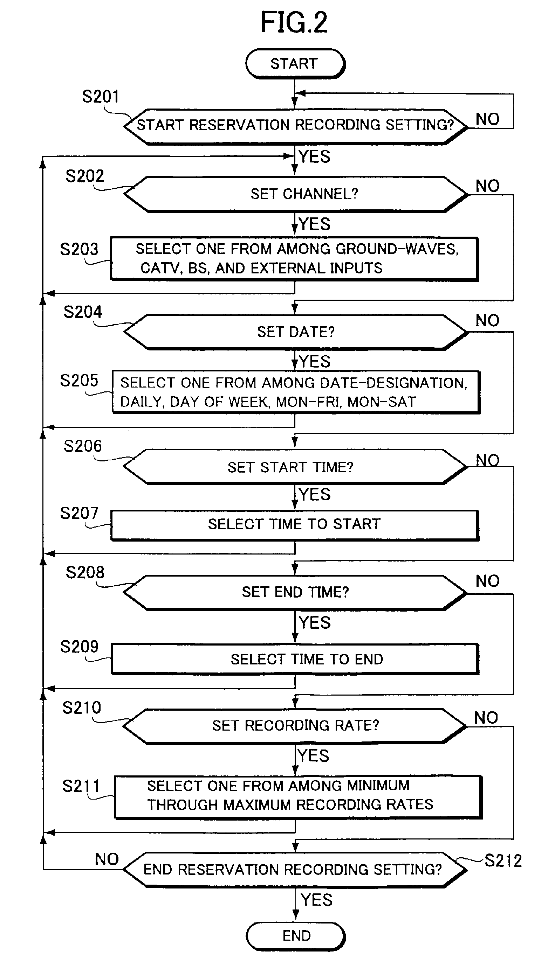

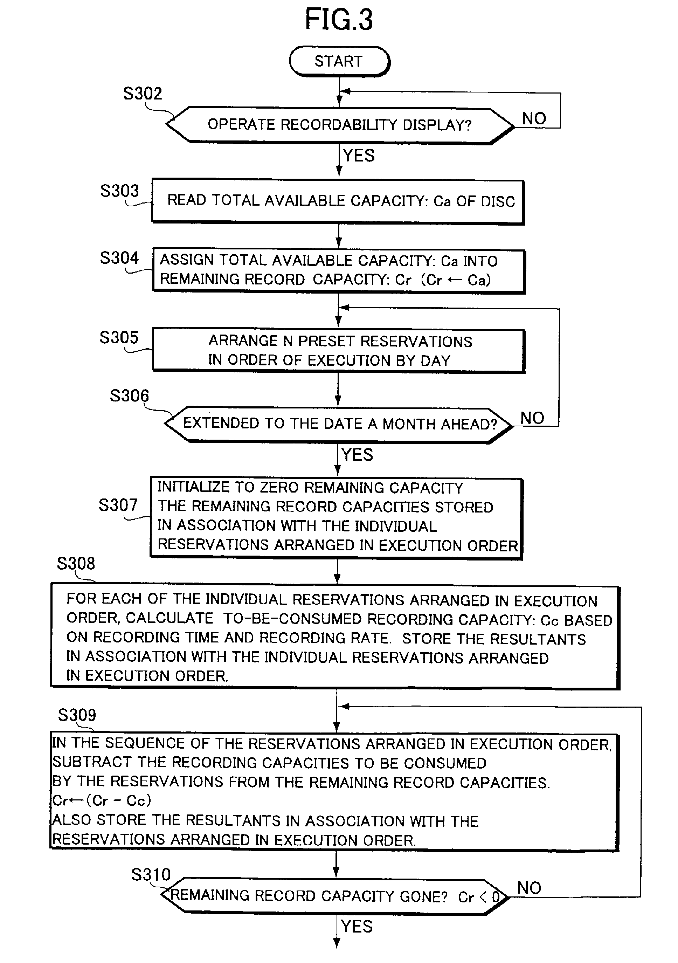

Incidentally, represented by the reference numeral 30 is the CPU which serves as the control center of the video recording and reproducing apparatus shown in the diagram. The CPU 30 is connected with a display unit 24, an operating unit 25, and a timer unit 26, along with a ROM 27 and a RAM 28. Based on the contents preprogrammed in the ROM 27 and with the aid of the RAM 28 as a working area, the CPU 30 controls the MPEG video encoder 4, the audio encoder 5, the multiplexer 6, the recording encoder 8, the recording circuit 9, the servo circuit 11, the reproducing circuit 14, the reproducing decoder 15, a management information memory 16, the demultiplexer 17, the MPEG video decoder 18, and the audio decoder 19. The CPU 30 also exercises a variety of controls. For example, the CPU 30 scans switches and the like entered via the operating unit 25 for input data, displays processed data through the display unit 24, and sets timer values via the timer unit 26 to obtain a time count value. As far as the present invention is concerned, the CPU 30 executes the processing shown by the flowcharts of Figs. 2 and 3. The details will be made later.

Based on the output of the CPU 30, an OSD data generating unit 29 generates on-screen display data (OSD data) for displaying reservation setting screens on the TV set 40. This OSD data is supplied to the TV set 40 instead of video signals output from the D/A converter 20, through the above-mentioned switch 22 turned to the lowest position.

Figs. 2 and 3 are flowcharts cited to explain the operations of the embodiment of the present invention, showing the flows for reservation recording setting and for reservation recordability display, respectively.

Hereinafter, the embodiment of the present invention shown in Fig. 1 will be detailed in operation with reference to the flowcharts shown in Figs. 2, 3, and 4.

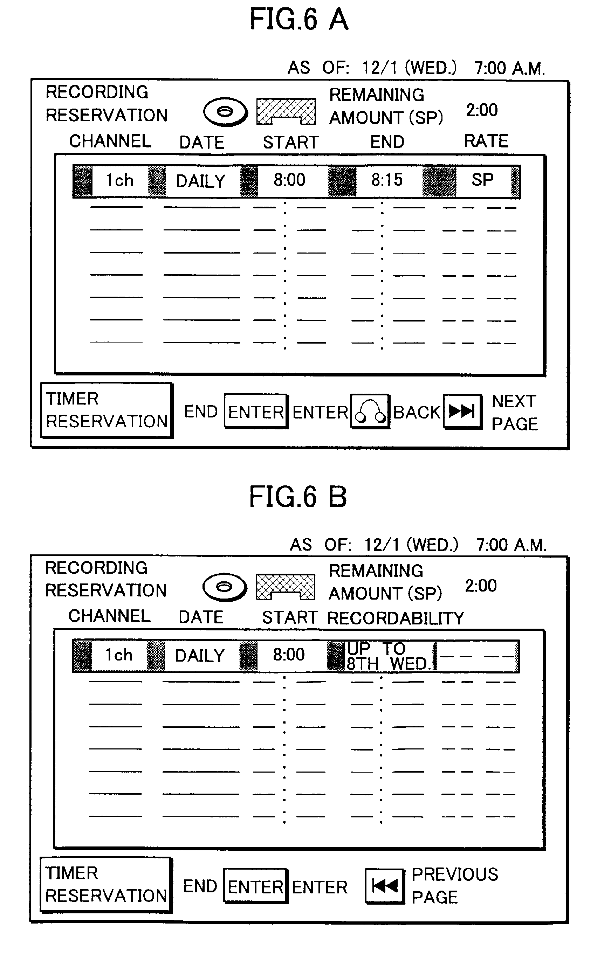

Description will be started with reservation recording setting operations. Initially, the user presses a timer reservation key on the operating unit 25 (or a not-shown remote controller) so that reservation screens are displayed on the TV set 40 to start the setting of reservation recording (step S201). Here, the switch 22 is turned to the lowest position under the control of the CPU 30. The reservation screens are shown in Figs. 6A through 9B. With the cursor (the shaded areas in the diagrams) moved to a row to enter, an enter switch on the operating unit 25 is depressed to determine the row to enter. First, setting is made as to which channel to record (step S202). Here, the channel field is switched in the order of ground wave broadcast channels (channel 1-62), cable TV (CATV) channels, broadcasting satellite (BS) channels, and external inputs. A switch depression on the operating unit 25 selects one of these channels (step S203) so that the channel to reserve is tuned.

Next, dates are set (step S204). In the date setting, the cursor is put on the date row in the reservation screen, and set to the date(s) to reserve (step S205). Here, one is selected from among date-designations such as today and tomorrow, daily, day of week, Monday-Friday, and Monday-Saturday. Then, the start time and the end time are set (step S206, S208). Specifically, the start time and end time are selected with the cursor on the start- and end-time rows, respectively (step S207, S209).

Next, the recording rate is set (step S210).
Specifically, with the cursor on the row of recording rate level, one is selected from among minimum through maximum recording rates. Here, standard SP21 is selected (step S211). Incidentally, there are provided 32 levels of recording rates. Needless to add, if higher image quality is desired, the recording requires more capacity, leading to shorter recording time. In contrast, when long time recording is desired, the recording should be lowered in image quality.

The above-described reservation recording setting (steps S201-S211) can be conducted more than once by cursor selections and movements. Then, an enter key on the operating unit 25 is depressed to end the reservation setting (step S212).

Meanwhile, in response to depression of a reservation acceptability display key on the operating unit 25 (or on the not-shown remote controller), the CPU 30 calculates free disc spaces corresponding to the individual reservations. Then, the CPU 30 displays on the TV set 40 whether or not the reservations are recordable. If not recordable, the recordability field shows a blank. This prompts the user to return to the previous screens and make a modification to the reservations, or replace the disc with another.

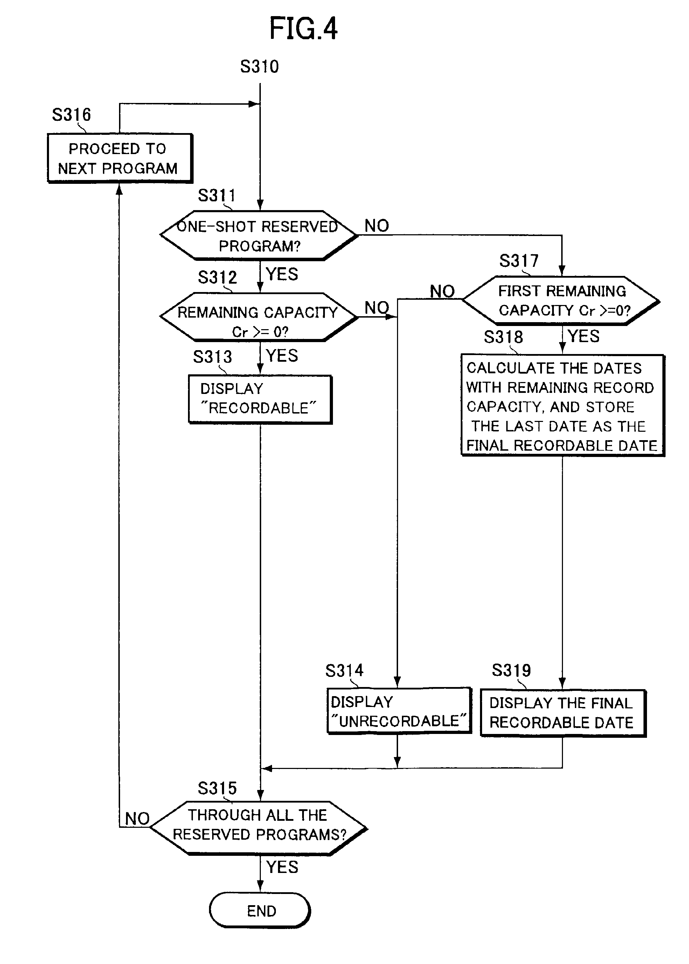

Now, referring to Figs. 3 and 4, detailed description will be given of the reservation recordability determining and displaying processes in the CPU 30. The processes shown in Figs. 3 and 4 are control procedures to be effected by the CPU 30 reading programs stored in the ROM 27 and executing the same. These control procedures are characterized in that not only the processing of displaying the recordability of one-shot reservations but also the processing of calculating and displaying the recordable terms of reservations to be repeated a plurality of times (daily, Monday-Friday, Monday-Saturday, day of week) is added to the timer reservation functions this type of recording and reproducing apparatus conventionally have.

Initially, an operation is made to start the recordable term display according to the present invention (step S302). Specifically, the reservation recording setting shown in Fig. 2 is performed, and then a next page key on the operation unit 25 is depressed to check the reservation acceptability. Accordingly, the CPU 30 reads the total available capacity Ca of the loaded disc (step S303). Incidentally, if the processing for reading the remaining disc capacity upon loading is featured as standard, the processing of the step S303 may be omitted.

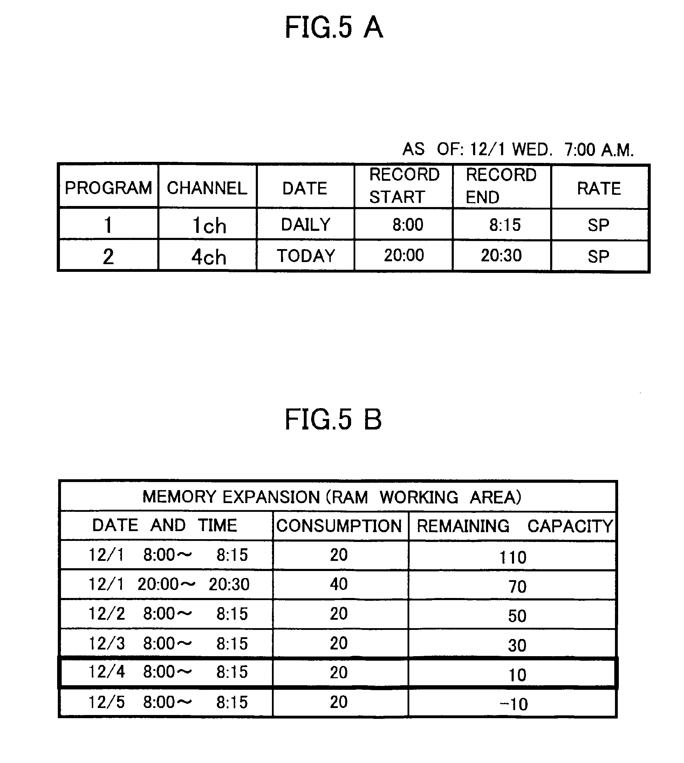

Next, the CPU 30 allocates a variable Cr, or a remaining record capacity, to the working area in the RAM 27, and sets this variable Cr at the above-mentioned total available capacity Ca of the loaded disc (step S304). Then, as shown in Figs. 5A and 5B, N preset reservations are memory-expanded on the RAM 27 and arranged in order of execution by day (step S305). This expansion processing is extended to the date a month ahead (step S306), and the remaining record capacities set in association with the individual reservations arranged in execution order are initialized to zero remaining capacity (step S307).

Then, for each of the reservations arranged in execution order, a recording capacity Cc for that reservation to consume is calculated from the recording time and the recording rate. The resultants are stored in association with the respective reservations arranged in execution order (step S308). Then, in the sequence of the reservations arranged in execution order, the to-be-consumed recording capacity Cc is subtracted from the remaining record capacity Cr after the previous reservation (the total available capacity Ca of the disc, in the case of the top reservation). The resultants Cr are stored in association with the respective reservations arranged in execution order (step S309).

Figs. 5A and 5B show the concept of the above-described memory expansion in table form. For the sake of convenience and simplicity in description, Fig. 5A shows only two reserved programs, i.e. the program #1 for daily-repeated recording and the program #2 for a one-shot reservation. The contents expanded on the working area in the RAM 27 are shown as simplified. The entries on the memory comprise the fields of date and time, consumption (Cc), and remaining capacity (Cr) each, and are arranged in order of execution of the reservations by day. The Cc and Cr fields are provided with the values of the case where the expanded programs are executed in succession.

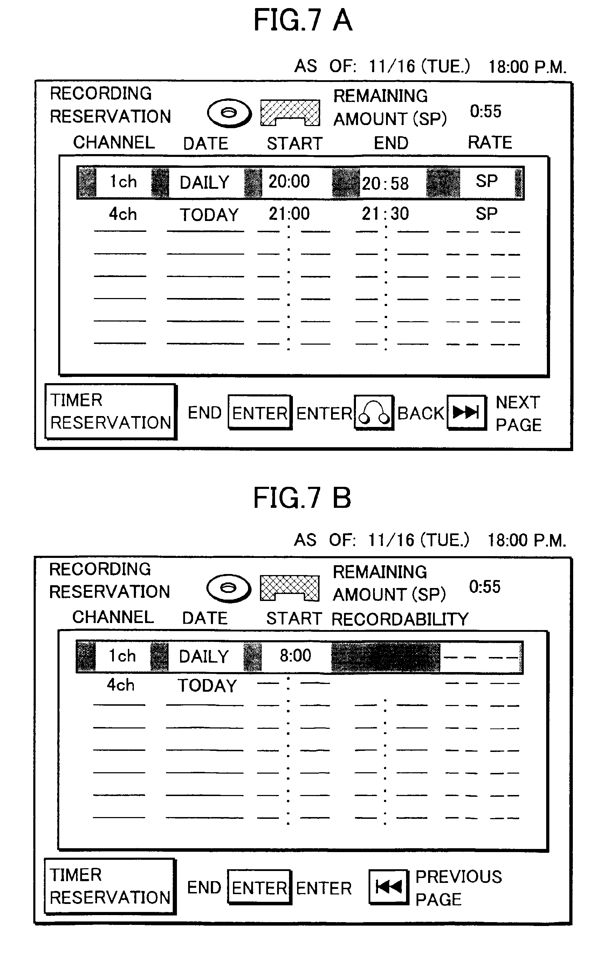

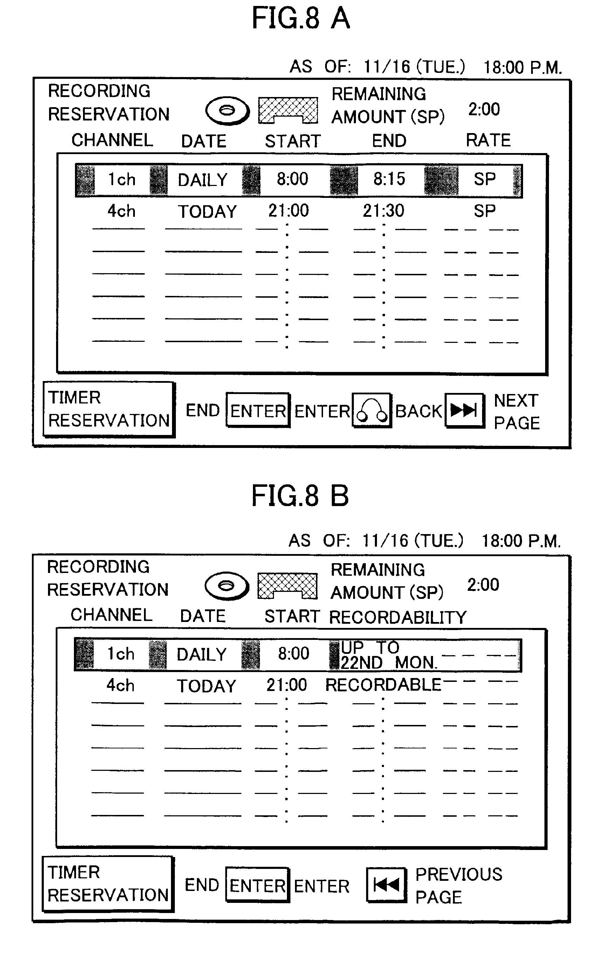

Returning to the flowcharts of Figs. 3 and 4, the CPU 30 determines whether or not the reservation to be executed first is based on a one-shot reserved program (step S311). If so, the CPU 30 makes a reference to the variable Cr to check for remaining capacity thereof (step S313). If the remaining capacity Cr is greater than or equal to 0, the CPU 30 displays on the TV set 40 via the OSD data generating unit 29 that the reserved program is recordable (step S313). This display mode is shown in Fig 8B. Here, the reserved program #2 is shown with an indication of "RECORDABLE" in its recordability field. On the other hand, when the remaining capacity Cr falls below 0, the CPU 30 displays in a position corresponding to the reserved program that this reserved program is unrecordable due to shortage of capacity. This display mode is shown in Fig 7B, in which both the reserved programs #1 and #2 are shown with blanks in their recordability fields. Incidentally, the display mode is not limited thereto. An indication of "UNRECORDABLE" or special symbols such as "*****" may be displayed in the recordability field.

Next, the CPU 30 determines whether or not it has gone through all the reserved programs (step S315). If not, the CPU 30 proceeds to the reservation confirmation of a next reserved program to be executed (step S316), returning to the processing of the step S311 described above.

If the next reserved program is to be repeated a plurality of times, the CPU 30 determines whether or not the remaining capacity Cr after the first execution thereof is greater than or equal to 0 (step S 317). If not, the CPU 30 proceeds to the above-described step S314 to display that this reserved program is unrecordable due to shortage of remaining capacity. On the other hand, if the remaining capacity Cr is greater than or equal to 0, then the CPU 30 successively checks for remaining capacities after a plurality of reservations to be executed on the basis of this reserved program, and determines the date of the last reservation to be executed as the final recordable date (due date) (step S318). With reference to the example of memory expansion shown in Fig. 5B, the CPU 30 checks the reservations in the first, third, fourth, and fifth rows, corresponding to the memory-expanded reserved program #1, and the remaining capacities after the respective reservations. The CPU 30 thereby determines the date of the fifth-row reservation to be last executed with a remaining record capacity as shown by a thick frame in the diagram, i.e. December 4th, as the final recordable date.

Returning to the flowcharts of Figs. 3 and 4, the CPU 30 displays on the TV set 40, in a position corresponding to the reserved program, that this reserved program is recordable up to the final recordable date (step S319). This display mode is shown in Fig 6B, in which the reserved program #1 is shown with an indication of "UP TO 8th Wed. "in its recordability field. Then, the CPU 30 proceeds to the above-described step S315, and, if all the reserved programs have been confirmed, ends this reservation recordability confirming process.

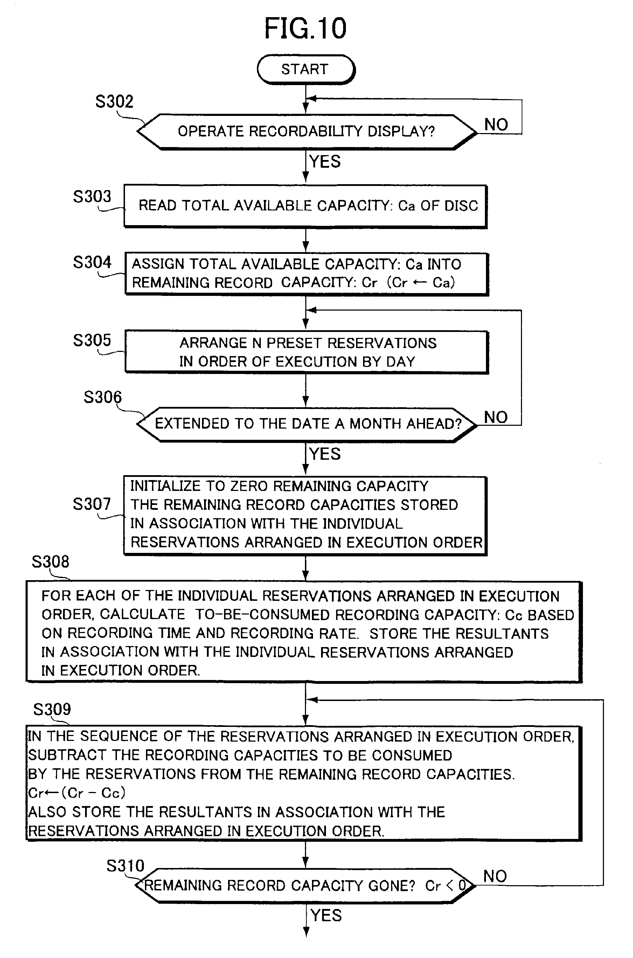

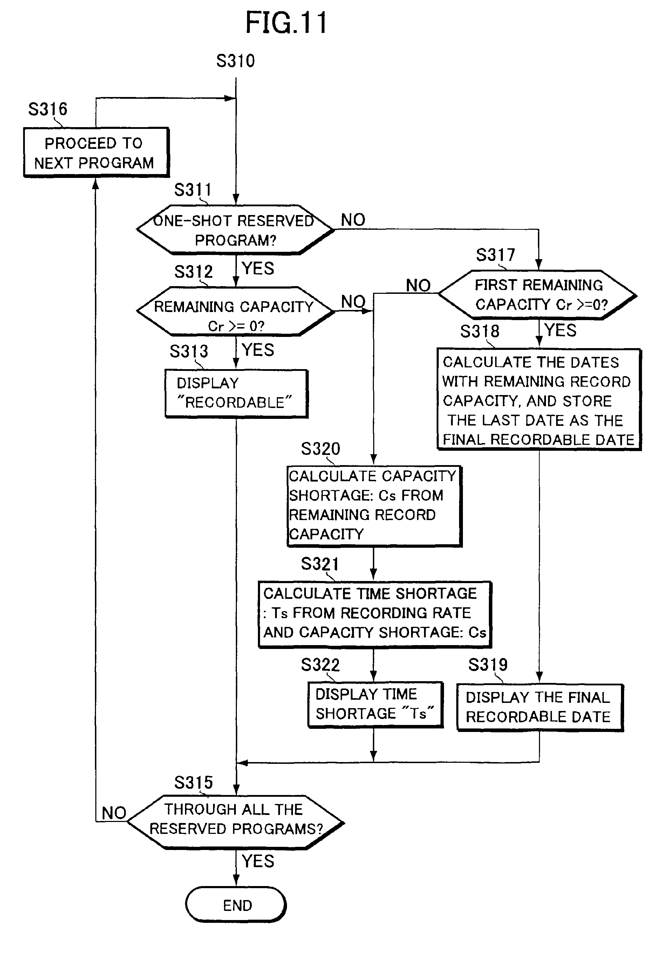

Figs. 10 and 11 are flowcharts showing another embodiment of the processes shown in Figs. 3 and 4 described above. According to the control procedures shown in Figs. 10 and 11, the display of unrecordability on the TV set 40 is replaced with the indication of a time shortage that arises in executing an unrecordable reserved program. Hereinafter, description will be given of the control procedures. The same steps as those of Figs. 3 and 4 will be designated by identical reference numerals, and description thereof be omitted.

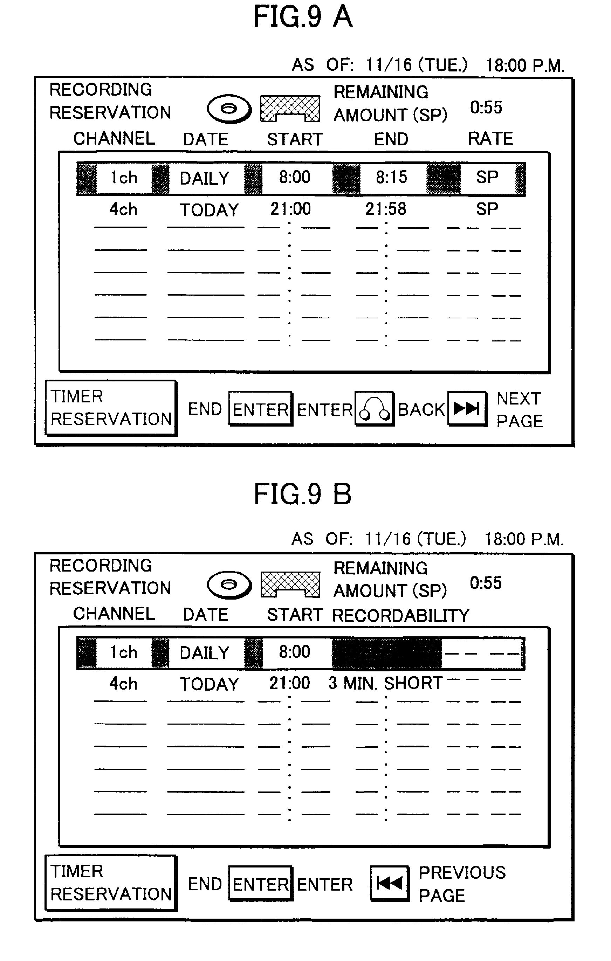

If the CPU 30 determines at step S312 or S317 that the remaining capacity Cr of a reservation is not greater than nor equal to 0, then it calculates a capacity shortage Cs from the remaining record capacity Cr (step S320) and calculates a time shortage Ts from the recording rate and the capacity shortage Cs (step S321). The CPU 30 then displays the time shortage Ts in a position corresponding to the reserved program so as to inform that this program is short of time Ts. This display mode is shown in Fig. 9B, in which the reserved program #2 is shown with an indication of "3 MIN. SHORT" in its recordability field.

Figs. 6A through 9B are diagrams showing modification examples of recordable dates of reserved programs, to be displayed by the display unit 24 under the controls of the CPU 30 shown in Figs. 3 and 4.

Fig. 6A shows a reservation setting screen seen on the TV screen, in which the cursor is moved from the operating unit 25 or by remote controller keys so that the channel number, date, recording start time, recording end time, and recording rate are programmed for each entry. Here is illustrated a program for recordings of channel 1, daily, 8:00-8:15 a.m., and standard rate, as of December 1st Wed., 7:00 a.m. with a remaining capacity of 2 h. In the diagram, the next page key is depressed to enter the screen of Fig. 6B. The recordability field in this screen shows that this program is recordable up to Dec. 8th (2 h/15 minutes = 8 days).

Fig. 7A illustrates the combination of a program #1 to be repeated daily (channel 1, daily, 20:00-20:58, standard rate) and a program #2 for one-shot reservation (channel 4, today, 21:00-21:30, standard rate), as of December 16th Tue. 18:00 p.m. with a remaining capacity of 55 minutes. In this case, the user depresses the next page key to enter the screen of Fig. 7B, in which the recordability fields are checked to find that both the programs #1 and #2 are unrecordable. Here, the unrecordabilities are shown by blanks.

That is, the reserved program #1 here contains a reservation to be executed prior to the reserved program #2, and the recordable capacity of the record medium falls short with respect to the recording time of the reserved program #1 (58 minutes > 55 minutes). In this case, the reserved program #2 is shown as unrecordable even through the reserved program #2 requires a recording capacity no greater than the recordable capacity of the disc (30 minutes < 55 minutes).

Fig. 8A illustrates the combination of a program #1 to be repeated daily (channel 1, daily, 8:00-8:15, standard rate) and a program #2 for one-shot reservation (channel 4, today, 21:00-21:30, standard rate), as of December 16th Tue. 18:00 p.m. with a remaining capacity of 2.00 h. In this case, the user depresses the next page key to enter the screen of Fig. 8B, in which the recordability fields are checked to find that the program #1 is recordable up to 22nd Mon., and the program #2 is recordable (2 h = 30 minutes + 15 minutes × 6 days).

Specifically, given that the reserved program #2 is executed prior to the first-to-be-executed program of the reserved program #1 and requires a recording capacity smaller than or equal to the recordable capacity of the disc (0.5 h < 2 h), there is displayed that the recording to be executed under the reserved program #2 is recordable to the disc.

Fig. 9A illustrates the combination of a program #1 to be repeated daily (channel 1, daily, 8:00-8:15, standard rate) and a program #2 for one-shot reservation (channel 4, today, 21:00-21:58, standard rate), as of December 16th Tue. 18:00 p.m. with a remaining capacity of 55 minutes. In this case, the user depresses the next page key to enter the screen of Fig. 9B, in which the recordability fields are checked to find that the program #1 is unrecordable and the program #2 is 3-minute short.

Specifically, given that the reserved program #2 is to be executed prior to the first-to-be-executed program of the reserved program #1 and requires a recording capacity greater than or equal to the recordable capacity of the disc (58 minutes < 55 minutes), there is displayed a disc recording time the recording to be executed under the reserved program #2 falls short (58 minutes - 55 minutes = 3 minutes).

While the above-described embodiments have dealt with the cases where the record medium is an optical disc, the present invention is not limited thereto, and may use any of magnetic discs, magnetic tapes, semiconductor memories. For example, the present invention may be applied to analog VCRs. Moreover, the present invention is restricted to neither the digital recording nor the on-screen display. The recording signals may be of sounds as well as of images. DVD recorders are standardized so as to always read the remaining capacity of a disc upon loading, and thus requires no additional software for detecting the remaining capacity. Therefore, particularly significant effects can be obtained from DVD-recorder applications.

As has been described above, according to the present invention, it can be calculated from the recordable capacity of the record medium and the record time of one execution of the reserved program up to what date the recording of a reserved program to reserve repetitive executions for a plurality of days is executable on a record medium. This makes it possible to inform the user up to what date the repetitive-reserving program is recordable, as well as whether or not a one-shot reservation is recordable. As a result, inconveniences resulting from shortage of record media capacity available can be resolved.

Moreover, even when a repetitive reserved program is mixed with a reserved program to reserve a recording at a designated date alone, it can be calculated from the recordable capacity of the record medium, the recording time of one execution of the repetitive reserved program, and the recording time of the reserved program to be executed at a designated date alone up to what date the recording of the repetitive reserved program is executable on a record medium. Then, the date, or the unrecordability and the time shortage can be displayed to inform the user in advance, thereby improving the inconveniences resulting from shortage of record media capacity available, such as recording mistakes including recording omissions of important records.

While there has been described what are at present considered to be preferred embodiments of the invention, it will be understood that various modifications may be made thereto, and it is intended that the appended claims cover all such modifications as fall within the true spirit and scope of the invention.

## Claims

1. A timer reservation device for staring a recording onto a record medium automatically at a reserved date and time, comprising:
reservation setting means capable of setting a first reserved program to reserve repetitive executions of a reservation setting for a plurality of days, said reservation setting extending from a recording start time to a recording end time;
remaining capacity detecting means for detecting the recordable remaining capacity of said record medium; and
calculating means for calculating up to what date the recording of said first reserved program is executable on said record medium, based on the recordable remaining capacity and the recording time of one execution of said first reserved program, wherein
a due date calculated by said calculating means is displayed on display means.

2. The timer reservation device according to claim 1, wherein:
said display means is a TV set externally connected to the time reservation device; and
the timer reservation device further comprises an on-screen data generating unit for generating a video signal to display specifics of said first reserved program and the due date calculated by said calculation means on a screen of said TV set.

3. The timer reservation device according to claim 1 or 2, wherein said reservation setting means selects at least one from among daily, day of week, Monday-Saturday, and Monday-Friday to reserve the repetitive executions of said reservation setting for a plurality of days.

4. The timer reservation device according to one of the claims 1 - 3 wherein:
the timer reservation device compresses a record signal at a predetermined compression rate and recording the resultant on said record medium; and
said calculating means calculates a recording capacity necessary for one execution of the reservation setting of said first reserved program based on the recording time of one execution of said first reserved program and said compression rate, substracts the necessary recording capacity from the recordable capacity repetitively, and sets the due date at the date of the last reservation setting to be executed with remaining capacity.

5. The timer reservation device according to one of the preceding claims, namely to claim 2, wherein:
said reservation setting means is also capable of setting a second reserved program to reserve an execution of a reservation setting at a designated date alone, said reservation setting extending from a recording start time to a recording end time; and
the timer reservation device, if said second reserved program is to be executed prior to the first-to-be-executed reservation setting of said first reserved program and requires a recording capacity smaller than or equal to the recordable capacity of said record medium, displays on said display means that the recording to be executed for said second reserved program is recordable on said record medium.

6. The timer reservation device according to one of the preceding claims, namely to claim 5,
wherein the timer reservation device, if said second reserved program is to be executed prior to the first-to-be-executed reservation setting of said first reserved program and requires a recording capacity greater than the recordable capacity of said record medium, displays on said display means that the recording for said second reserved program is unrecordable on said record medium.

7. The timer reservation device according to one of the preceding claims, namely to claim 5,
wherein the timer reservation device, if said second reserved program is to be executed prior to the first-to-be-executed reservation setting of said first reserved program and requires
a recording capacity greater than the recordable capacity of said record medium, displays on said display means the recording time said record medium falls short of in making the recording for said second reserved program.

8. The timer reservation device according to one of the preceding claims,
wherein:
said reservation setting means is also capable of setting a second reserved program to reserve an execution of a reservation setting at a designated date alone, said reservation setting extending from a recording start time to a recording end time; and
the timer reservation device, if said first reserved program contains a reservation setting to be executed prior to said second reserved program and said record medium falls short of the recordable capacity with respect to the recording time of said first reserved program, displays on said display means that said second reserved program is unrecordable, even in the cases where said second reserved program requires a recording capacity smaller than or equal to the recordable capacity of said record medium.

9. A timer reservation device for staring a recording onto a record medium automatically at a reserved date and time, comprising:
reservation setting means capable of setting a first reserved program to reserve repetitive executions of a reservation setting for a plurality of days and a second reserved program to reserve an execution of a reservation setting at a designated date alone, said reservation settings each extending from a recording start time to a recording end time;
remaining capacity detecting means for detecting the recordable remaining capacity of said record medium; and
calculating means for calculating up to what date the recording of said first reserved program is executable on said record medium, based on the recordable remaining capacity, the recording time of one execution of said first reserved program, and, if said second reserved program is to be executed prior to said first reserved program, the recording time of said second reserved program, wherein
a due date calculated by said calculating means is displayed on display means.

10. The timer reservation device according to claim 9, wherein:
said display means is a TV set externally connected to the time reservation device; and
the timer reservation device further comprises an on-screen data generating unit for generating a video signal to display specifics of said first reserved program and the due date calculated by said calculation means on a screen of said TV set.
